# EUROPÄISCHE PATENTSCHRIFT

(11) **EP 1 072 621 B1**
(45) Veröffentlichungstag und Bekanntmachung des Hinweises auf die Patenterteilung: **25.01.2006**
(21) Anmeldenummer: 00115032.5
(22) Anmeldetag: 25.07.2000
(51) Int. Cl.: C08G 18/12, C08G 18/48, C08G 18/50, C09J 175/08

(54) **Faserhaltige Klebstoffzusammensetzung**
Adhesive composition containing fibers
Composition adhésive contenant des fibres

(30) Priorität: 28.07.1999 DE 19935452
(43) Veröffentlichungstag der Anmeldung: 31.01.2001
(73) Patentinhaber: BASF Aktiengesellschaft, 67056 Ludwigshafen (DE)
(72) Erfinder: Keppeler, Uwe, Dr., 67126 Hochdorf-Assenheim (DE); Pfütze, Eberhard, Dr., 55299 Nackenheim (DE)
(74) Vertreter: Isenbruck, Günter

(56) Entgegenhaltungen:
- WO-A-99/19141
- DE-A- 4 412 759
- DE-A- 4 440 322
- DE-A- 19 646 879
- US-A- 5 233 009

## Beschreibung

Die Erfindung betrifft eine Klebstoffzusammensetzung, ein Verfahren zur Herstellung derselben, einen diese enthaltenden Verbund sowie die Verwendung der Klebstoffzusammensetzung oder des Verbundes im Hoch-, Tief-, Schiffs-, Flugzeug- oder Fahrzeugbau.

Holz ist ein anerkannter und bewährter Werkstoff im konstruktiven Hochbau. Für die Ausführungen größerer Spannweiten, als es einzelne geschnittene Balken erlauben, wird Brettschichtholz eingesetzt. Brettschichtholz wird durch vollflächiges Verleimen einzelner Brettlamellen industriell gefertigt. Durch geleimte Verbindungen kurzer Holzlamellen in Längsrichtung, die sogenannte Keilzinkenverbindung, ist es möglich, praktisch unendlich lange Einzellamellen zu fertigen, die auf die benötigte Bauteilgröße gekappt werden. Neben größeren Dimensionen bietet die Verleimung eine Vergütung des Naturstoffes Holz, da naturgegebene Fehlstellen wie Äste ausgekappt und das Schwinden und Quellen des Holzes infolge Klimaveränderungen erheblich vermindert werden.

Für derartige Zwecke werden derzeit in der Regel Klebstoffzusammensetzungen eingesetzt, die hauptsächlich auf Phenol/Resorcin- bzw. Melamin/Harnstoff-Harzen basieren.

Die heute überwiegend im Einsatz befindlichen Leimsysteme sind Amino- und Phenoplaste, die in einer Polykondensationsreaktion zur fertigen Leimfuge aushärten. Die chemische Aushärtungsreaktion dieser überwiegend in zwei Komponenten vorliegenden Systeme wird durch Vermischung von Leim und Härter zur Leimflotte gestartet. Bei Aminoplasten erfolgt die Härtungsinitiierung zumeist durch Absenkung des pH-Wertes, bei Phenoplasten durch Zugabe von Formaldehyd oder Paraformaldehyd. Auch in der fertigen Leimfuge liegt noch freier Formaldehyd in geringen Mengen vor, der über einen längeren Zeitraum an die Umgebungsluft abgegeben werden kann. Formaldehyd steht jedoch im Verdacht, gesundheitliche Schädigungen zu verursachen.

Aus DE 44 12 759 A1 ist eine formaldehydfreie Klebstoffzusammensetzung, basierend auf einem isocyanathaltigen Polyurethan-Präpolymeren, bekannt. Diese Klebstoffzusammensetzung weist insbesondere eine für die Verarbeitung wenig geeignete Viskosität und eine praxisfremde Preßzeit auf. Die Viskosität ist insbesondere für die Pumpfähigkeit und die Fähigkeit der Klebstoffzusammensetzung in das zu verklebende Substrat einzudringen, von großer Bedeutung (Adhäsion).

DE 44 40 322 A1 beschreibt eine Klebstoffzusammensetzung, enthaltend ein Polyurethan-Präpolymer, erhältlich aus Polyisocyanat und Polyol, einen Katalysator und Füllstoff. Über eine Kombination aus einem nicht-faserförmigen Füllkörper und mindestens einer Faser, die einen Füllstoff bilden, enthält die DE 44 40 322 A1 keine Offenbarung. Die DE 196 46 879 A1 beschreibt einen Einkomponenten-Polyurethan-Reaktionsklebstoff mit endständigen NCO-Gruppen auf Basis mindestens eines Polyisocyanats, mindestens eines NCO-reaktiven Oligomers und mindestens eines Katalysators. Diese Schrift enthält keine Offenbarung über Fasern, insbesondere in Kombination mit einem nicht-faserförmigen Füllkörper, die spezifische Längen und/oder Durchmesser aufweisen.

Eine Aufgabe der vorliegenden Erfindung ist deshalb, eine Klebstoffzusammensetzung zur Verfügung zu stellen, die keine Formaldehyd-Emissionen aufweist.

Weiterhin ist es eine erfindungsgemäße Aufgabe, daß die zur Verfügung gestellte Klebstoffzusammensetzung eine gute Pumpfähigkeit und Verarbeitbarkeit, insbesondere eine geeignete Viskosität, aufweist. Bezüglich der Verarbeitung besteht eine weitere Aufgabe insbesondere darin, daß bei der Brettschichtholz-Verleimung die Klebstoffzusammensetzung sich in länglichen Gebilden, insbesondere Schnüren, durch meist düsenartige Ausbringvorrichtungen auf die Oberfläche des Holzbrettes auftragen lassen. Hierbei ist es von besonderer Bedeutung, daß der Auftrag reproduzierbar, pulsationsfrei und vorzugsweise besonders gleichmäßig erfolgt, wie es vorzugsweise mit einer in der Zeitschrift "Holzzentralblatt", 11. Oktober 1996, beschriebenen Anlage möglich ist.

Eine andere erfindungsgemäße Aufgabe liegt darin, die Lagerstabilität von auf Polyurethan-Präpolymeren basierenden Klebstoffzusammensetzungen zu verbessern.

Zudem besteht eine erfindungsgemäße Aufgabe darin, daß die Klebstoffzusammensetzung als Ein-Komponenten-System eingesetzt werden kann.

Darüber hinaus besteht eine Aufgabe darin, daß die erfindungsgemäß bereitgestellten Klebstoffzusammensetzungen den vor allen Dingen im Hoch- und Tiefbau bestehenden Anforderungen, die insbesondere von staatlichen Prüfungsanstalten gestellt werden, mindestens genauso genügt, wie die bisher eingesetzten Klebstoffzusammensetzungen, insbesondere die auf Phenol/Resorcin- bzw. Melamin/Harnstoff-Harzen basierenden Klebstoffzusammensetzungen, bei vergleichbaren Anwendungen.

Die vorstehenden Aufgaben werden gelöst durch eine Klebstoffzusammensetzung, die als Bestandteile mindestens enthält:
- bis zu 99,9 Gew.% der Klebstoffzusammensetzung eines Präpolymers, erhältlich aus mindestens einer eine gegenüber Isocyanaten reaktive Verbindung aufweisenden Komponente A und mindestens einer ein Isocyanat aufweisenden Komponente B,
- 0,1 bis 20 Gew.% mindestens eine Faser enthaltenden Füllstoffs, der zusätzlich zu der Faser aus mindestens einem nicht-Faserförmigen Füllkörper besteht,
- 0 bis 20 Gew.% übliche Zusatz- und Hilfsstoffe,
- 0 bis 10 Gew.% eines Aktivators, wobei die mindestens eine Faser einen Durchmesser im Bereich von 5 bis 100 µm und eine Länge im Bereich von 0,02 bis 6 mm besitzt.

Erfindungsgemäß ist es bevorzugt, daß die Klebstoffzusammensetzung im Bereich von 70 bis 99, bevorzugt 80 bis 94 und besonders bevorzugt 85 bis 90 Gew.% des Präpolymers und 1 bis 17, bevorzugt 5 bis 17 und besonders bevorzugt 6 bis 15 Gew.% des mindestens eine Faser enthaltenden Füllstoffs sowie 0 bis 5, bevorzugt 0,01 bis 3 und besonders bevorzugt 0,01 bis 1 Gew.-% des Aktivators und gegebenenfalls bis zu 20 Gew.-% weitere Zusatz- und Hilfsstoffe, jeweils bezogen auf die Klebstoffzusammensetzung, aufweist.

Weiterhin ist bei der erfindungsgemäßen Klebstoffzusammensetzung mindestens eines der folgenden Hauptmerkmale (i) bis (iii) bevorzugt:
(i) das Präpolymer weist mindestens eines der folgenden Untermerkmale (a) und (b) auf:
   (a) einen NCO-Gehalt von 5 bis 30 Gew.-%, bezogen auf das Präpolymer,
   (b) eine Viskosität bei 25 °C im Bereich von 300 bis 150.000 mPas,
(ii) die Komponente A weist mindestens eines der folgenden Untermerkmale (c) und (d) auf:
   (c) die Komponente A enthält mindestens ein Diol oder Polyol, vorzugsweise ein Diol oder Triol und besonders bevorzugt ein Diol und Triol,
   (d) die OH-Zahl der Komponente A liegt im Bereich von 10 bis 500 mg KOH/g,
(iii) der Füllstoff weist das folgende Untermerkmal (e) auf:
   (e) die Faser besteht mindestens aus einem Faserpolymer.

Die Viskosität bei 25°C des Präpolymers liegt vorzugsweise in einem Bereich zwischen 300 und 15.000, bevorzugt 500 und 10.000 mPas, wenn die Klebstoffzusammensetzung pumpbar sein soll. Ist es hingegen beabsichtigt, die Klebstoffzusammensetzung als pastöse, spachtelfähige Masse einzusetzen, liegt die Viskosität bei 25°C des Präpolymers vorzugsweise im Bereich > 15.000 bis 150.000 und besonders bevorzugt im Bereich von 20.000 bis 100.000 mPas.

Weiterhin ist es erfindungsgemäß bevorzugt, daß die Klebstoffzusammensetzung lösungsmittelarm ist. Dieses ist dann der Fall, wenn die in der Klebstoffzusammensetzung enthaltene Lösungsmittelmenge < 10, bevorzugt < 5 und besonders bevorzugt < 2 Gew.% beträgt. Lösungsmittel sind erfindungsgemäß organische und anorganische Flüssigkeiten, die sich als Träger der übrigen Bestandteile der Klebstoffzusammensetzung eignen und nicht mit zumindest einem Teil der anderen Bestandteile aushärten.

Vorzugsweise ist die erfindungsgemäße Klebstoffzusammensetzung lösungsmittelfrei.

In einer erfindungsgemäßen Ausführungsform der Klebstoffzusammensetzung sind sowohl das vorgenannte Hauptmerkmal des Präpolymers (i) als auch das Hauptmerkmal (ii) der Komponente A verwirklicht.

In einer anderen erfindungsgemäßen Ausführungsform der Klebstoffzusammensetzung sind das Hauptmerkmal (ii) der Komponente A sowie das Hauptmerkmal des Füllstoffs (iii) erfüllt.

In einer anderen erfindungsgemäßen Ausführungsform der Klebstoffzusammensetzung sind alle drei Hauptmerkmale (i) bis (iii) erfüllt.

Bevorzugte Ausführungsformen der Klebstoffzusammensetzung sind solche, in denen bei dem Präpolymer, der Komponente A und dem Füllstoff jeweils beide Untermerkmale (a) und (b) bzw. (c) und (d) bzw. erfüllt sind bzw. das Untermerkmal (e) erfüllt ist.

In einer anderen erfindungsgemäß bevorzugten Ausführungsform der Klebstoffzusammensetzung sind sowohl alle Hauptmerkmale (i) bis (iii) als auch alle Untermerkmale (a) bis (e) erfüllt.

In einer weiteren erfindungsgemäßen Ausführungsform der Klebstoffzusammensetzung ist neben den Merkmalen (i) bis (iii) noch mindestens eines der Merkmale (iv) und (v) erfüllt:
(iv) das Faserpolymer ist mindestens ein Polyamid,
(v) der Füllkörper besteht aus mindestens einem anorganischen Material.

Es ist bevorzugt, daß die Faserpolymere der Klebstoffzusammensetzung überwiegend aus organischen oder anorganischen Materialien gebildet werden. Als organische Materialien für Faserpolymere kommen insbesondere Polykondensate und Polyadditionspolymere in Betracht, die vorzugsweise kein Polyurethan sind, wobei Polykondensate bevorzugt sind. Als Polykondensate sind Polycarbonate, Polyester, Polyamide, Polyimide, besonders geeignet.

Polyadditionspolymere sind insbesondere Polyacrylate, Polymethacrylate, Polystyrole, Polyacrylnitrile, Polyethylen, Polypropylen, Polyvinylalkohol sowie die Copolymere aus mindestens zwei Monomeren der vorgenannten Unipolymere sowie deren Blends aus mindestens zwei davon.

In der erfindungsgemäßen Klebstoffzusammensetzung ist es besonders bevorzugt, daß als Faserpolymer ein Polyamid eingesetzt wird. Hierzu sind alle dem Fachmann bekannten, handelsüblichen Polyamide geeignet. Besonders haben sich jedoch Polyamide wie Nylon, insbesondere Nylon-6,6 oder Nylon-6 sowie Polyaramide bewährt.

Weiterhin können die Fasern auf natürlichen organischen Faserpolymeren, beispielsweise Cellulose, Baumwolle, Jute, Viskose und Sisal, basieren oder bestehen. Zudem können die Fasern auch aus anorganischen Materialien gebildet werden. Als anorganische Faserpolymere sind Kohlenstoff-, Glas- und Mineralwollfasern bevorzugt. Weiterhin ist es möglich, daß die Fasern aus verschiedenen Materialien, beispielsweise durch Verspinnen, erhalten werden.

Die erfindungsgemäß eingesetzten Fasern besitzen einen Durchmesser im Bereich von 5 bis 100, bevorzugt 10 bis 60 und besonders bevorzugt 10 bis 30 µm und eine Länge im Bereich von 0,02 bis 6, bevorzugt 0,05 bis 4 und besonders bevorzugt 0,1 bis 2 mm.

Zudem weist die erfindungsgemäße Klebstoffzusammensetzung einen nicht-Faserförmigen Füllkörper auf, der aus mindestens einem anorganischen Material besteht. Grundsätzlich sind alle dem Fachmann bekannten und insbesondere die käuflich erhältlichen anorganischen Materialien für den erfindungsgemäßen Klebstoff geeignet, die als Feststoff vorliegen. Die anorganischen Materialien müssen insbesondere in dem Temperaturbereich, in dem die erfindungsgemäße Klebstoffzusammensetzung verarbeitet wird und der verklebte Gegenstand später eingesetzt wird, als Feststoff vorliegen. Dieser Temperaturbereich beginnt vorzugsweise bei -50 und reicht bis +130 °C.

Als besonders geeignete anorganische Materialien haben sich die Sauerstoffverbindungen des Siliciums oder Aluminiums, oder Magnesiums oder mindestens zwei davon, die darüber hinaus gegebenenfalls noch weitere Elemente aufweisen, bewährt. Besonders geeignet sind Silikate und Aluminiumoxide, beispielsweise Tonerde, wie China Clay, und Quarzverbindungen oder Kieselsäure.

Die nicht-faserförmigen Füllkörper sind vorzugsweise teilchenförmig. 80 % der teilchenförmigen Füllkörper besitzen eine Teilchengröße im Bereich von 0,01 bis 50, bevorzugt 0,1 bis 10 und besonders bevorzugt 0,2 bis 8 µm.

Der erfindungsgemäß verwendete Füllstoff kann Fasern oder zusätzlich Füllkörper beinhalten. Sofern der Füllstoff sowohl Fasern als auch Füllkörper aufweist, ist es bevorzugt, daß mindestens so viel Füllkörper wie Fasern, vorzugsweise Füllkörper im Überschuß, im Füllstoff zu finden sind.

Füllstoffe sind insbesondere deshalb in der erfindungsgemäßen Klebstoffzusammensetzung enthalten, um deren physikalische Eigenschaften für die verschiedenen Verwendungen zu verbessern. Hierzu muß die Klebstoffzusammensetzung nach der Aushärtung eine möglichst kompakte, blasenfreie Klebstoffschicht bilden, und die Fugen zwischen den Substraten müssen möglichst vollständig ausgefüllt sein. Zur Erhöhung der Adhäsion sollte die Klebstoffzusammensetzung zu einem Teil in die Substratoberfläche eindringen. Jedoch darf es nach der Aushärtung der Klebstoffzusammensetzung zum Klebstoff nicht durch dieses Eindringen bzw. durch Schwund zu Hohlräumen kommen, welche die Kohäsion verschlechtern könnten. Insbesondere in dickeren Fugen, im Bereich von größer 0,1 bis 1 mm, vorzugsweise 0,2 bis 1 mm, können diese Anforderungen besonders gut durch die Einarbeitung von Füllstoffen in der zuvor beschriebenen Zusammensetzung in die Klebstoffzusammensetzung erfüllt werden.

Bei den in den erfindungsgemäßen Klebstoffzusammensetzungen enthaltenen Füllstoffen hat es sich besonders bewährt, daß diese einen Wassergehalt von unter 5, bevorzugt unter 1 und besonders bevorzugt unter 0,1 Gew.-%, bezogen auf den Füllstoff, besitzen. Dieses ist insbesondere mit Hinblick auf die Herstellung der erfindungsgemäßen Klebstoffzusammensetzung von Vorteil.

Der Aktivator der erfindungsgemäßen Klebstoffzusammensetzung besteht mindestens aus einem Morpholinderivat. Als Morpholinderivate besonders geeignet sind 4-Methylmorpholin, 4-Ethylmorpholin, 4-Cyclohexylmorpholin, 2,2'-Dimorpholinodiethylether oder Dimorpholinopolyethylenglykol, oder mindestens zwei davon. Weiterhin können neben dem Morpholinderivat weitere aktivierend wirkende Verbindungen wie sie beispielsweise als Polyurethan-Katalysatoren in Becker/Braun, Kunststoffhandbuch 7 (1993) beschrieben sind, verwendet weiden, wobei der Anteil der Morpholinderivate vorzugsweise überwiegt.

Vorteilhaft, insbesondere im Hinblick auf die Lagerstabilität, haben sich thixotropierende Hilfsmittel bewährt. Besonders bevorzugte thixotropierende Hilfsmittel sind Bentonite, Kaoline, Alginsäure und Kieselsäure, wobei Kieselsäure besonders bevorzugt ist. Neben oder anstelle der vorgenannten aus Festkörpem bestehenden thixotropierenden Hilfsmittel sind lösliche thixotropierende Hilfsmittel bevorzugt, die beispielsweise über die Umsetzung eines Isocyanats in Gegenwart von Aminen gewonnen werden können, wie es in den Druckschriften EP 300 388 A1, DD 156 480, DD 211 689, DD 211 930 und DD 211 931 beschrieben ist.

Bei thixotropierenden Hilfsmitteln handelt es sich um kleinstteilige Stoffe, die Flüssigkeiten bereits verdicken, wenn sie in geringen Mengen der Flüssigkeit, beispielsweise bis maximal 10 Gew.-%, bezogen auf die Flüssigkeit, zugesetzt werden. Vorzugsweise besitzen diese kleinen Teilchen an ihrer Oberfläche Silanogruppen, die mit der Flüssigkeit, mit der sie dispergiert werden, unter Ausbildung von Wasserstoffbrückenbindungen in Wechselwirkung treten und somit zu einer Verdickung dieser Flüssigkeit führen. Typisch für thixotropierende Hilfsmittel ist, daß bei gleicher Menge die Verdickungswirkung mit abnehmender Teilchengröße bei entsprechend sorgfältiger Dispergierung durch starkes Mischen steigt. Weiterhin weisen die thixotropierenden Hilfsmittel den Vorteil auf, daß sie in der dispergierten Flüssigkeit nicht sedimentieren. Zudem verhindern oder verzögern die thixotropierenden Hilfsmittel die Sedimentation von Füllstoffen. Als Materialien für thixotropierende Hilfsmittel sind in feiner. Pulverform Montmorillonit, Mg/Al-Silikat, Al/Na-Silikat, Bentonite, Hectorit, Na/Mg-Silikat, pyrogene Kieselsäuren, hydratisierte Kieselsäuren, Homblende-Chrysotil, Chrysotil-Asbest, Chrysotil-Kieselsäure sowie gefälltes MgO bevorzugt, wobei pyrogene Kieselsäuren, beispielsweise erhältlich als Aerosil der Degussa-Hüls AG, und Mg-Silikate, erhältlich als Bentone von Kronos Titan GmbH Leverkusen, bevorzugt sind und Aerosil besonders bevorzugt ist.

Die erfindungsgemäße Klebstoffzusammensetzung wird dadurch hergestellt, indem die zuvor definierten Bestandteile miteinander in Kontakt gebracht werden. Dieses geschieht vorzugsweise in Gegenwart von Mischeinrichtungen, wobei sowohl dynamische als auch statische, vorzugsweise dynamische, Mischeinrichtungen eingesetzt werden können.

Vorzugsweise wird das erfindungsgemäße Präpolymer dadurch erhalten, daß die Komponente B, vorzugsweise ein monomeres Isocyanat, vorgelegt und die Komponente A, vorzugsweise ein geeigneter Alkohol, in einem Temperaturbereich zwischen 20 und 120, bevorzugt 40 bis 100 und besonders bevorzugt 60 bis 90 °C in einem Reaktor mit Mischaggregat zugegeben wird.

Die Bestandteile werden vorzugsweise durch die Mischeinnchtungen so ausgiebig miteinander vermischt, daß eine möglichst homogene Klebstoffzusammensetzung aus den Bestandteilen erhältlich ist.

Die erfindungsgemäße Klebstoffzusammensetzung weist mindestens eine der folgenden Materialeigenschaften (g) bis (m) auf:
(g) Antrockenzeit bei Normalklima 20/65-1 gemäß DIN 68141 bei einer Auftragsmenge von 250 g/m² im Bereich von 20 bis 40, bevorzugt 30 bis 50 und besonders bevorzugt 40 bis 80 Minuten,
(h) Antrockenzeit bei Normalklima 20/65-1 gemäß DIN 68141 bei einer Auftragsmenge von 400 g/m² im Bereich von 20 bis 40, bevorzugt 30 bis 60 und besonders bevorzugt 40 bis 100 Minuten,
(i) Viskosität bei 25°C im Bereich von 300 bis 150.000 mPas,
(k) Lagerstabilität von 1 bis 4, bevorzugt 2 bis 6 und besonders bevorzugt 3 bis 8 Monaten,
(l) NCO-Gehalt im Bereich von 3 bis 20, bevorzugt 5 bis 17 und besonders bevorzugt von 6 bis 15 Gew.%, bezogen auf die Klebstoffzusammensetzung,
(m) Mindestpreßzeit gemäß DIN 68141 im Bereich von 5 bis 8, bevorzugt 4 bis 6 und besonders bevorzugt 2 bis 4 Stunden.

Vorzugsweise liegt die Viskosität bei 25°C der Klebstoffzusammensetzung in einem Bereich von 300 bis 15.000, bevorzugt 500 bis 10.000 mPas für pumpfähige Klebstoffzusammensetzungen. Ist es hingegen beabsichtigt, daß die Klebstoffzusammensetzung eine pastöse, zum Verspachteln geeignete Zusammensetzung besitzt, liegt die Viskosität bei 25°C der Klebstoffzusammensetzung vorzugsweise in einem Bereich von 15.000 bis 150.000 und besonders bevorzugt 20.000 bis 100.000 mPas.

Die Lagerstabilität der Klebstoffzusammensetzung wird über das Sedimentationsverhalten der Füllstoffe bestimmt. Lagerstabilität liegt erfindungsgemäß demnach dann vor, wenn in einem mit Klebstoff vollständig gefüllten und feuchtigkeits- sowie luftdicht verschlossenen Gefäß über einen gegebenen Zeitraum die Phasenseparierung über die Zeit verfolgt wird und das Absinken der Phasengrenze (Absetzen von Füllstoffen) weniger als 5 %, bezogen auf die Anfangsfüllhöhe, beträgt.

Eine bevorzugte Ausführungsform der erfindungsgemäßen Klebstoffzusammensetzung weist von den vorgenannten Merkmalen mindestens die Viskosität (i) und die Lagerstabilität (k) auf.

Eine andere bevorzugte Ausführungsform der erfindungsgemäßen Klebstoffzu - sammensetzung weist von den vorgenannten Merkmalen mindestens die Viskosität (i) und die Lagerstabilität (k) sowie die Mindestpreßzeit (m) auf.

Zudem weist eine Ausführungsform der erfindungsgemäßen Klebstoffzusammensetzung von den vorgenannten Materialeigenschaften mindestens die Viskosität (i), Lagerstabilität (k) und den NCO-Gehalt (1) auf.

Ferner weist eine Ausführungsform der erfindungsgemäßen Klebstoffzusammensetzung von den vorgenannten Materialeigenschaften mindestens die Viskosität (i), Lagerstabilität (k) und den NCO-Gehalt (1) sowie die Mindestpreßzeit (m) auf.

Eine andere bevorzugte Ausführungsform der erfindungsgemäßen Klebstoffzusammensetzung weist alle der vorgenannten Materialeigenschaften (g) bis (m) auf.

Weiterhin betrifft die Erfindung einen Verbund, der mindestens ein Substrat und eine erfindungsgemäße Klebstoffzusammensetzung enthält. Das Substrat ist vorzugsweise ein cellulosehaltiges Material. Als cellulosehaltige Materialien kommen alle dem Fachmann bekannten, natürlich vorkommenden und künstlich gefertigten Materialien in Betracht. Als natürlich vorkommende Materialien seien insbesondere Hölzer verschiedener Bäume, beispielsweise Nadelhölzer oder Laubhölzer, genannt. Künstliche, cellulosehaltige Materialien sind beispielsweise Papiere, Pappen, Laminate, Preßspanplatten und dergleichen. Als Substrate kommen gleichfalls Materialien in Betracht, die sich in ähnlicher Weise wie die cellulosehaltigen Materialien mit der erfindungsgemäßen Klebstoffzusammensetzung verkleben lassen.

Ein bevorzugter Verbund sind Endlosholzbretter, die aus mindestens zwei, an ihren Endstücken miteinander über eine Keilzinkenverbindung verbundenen Einzelbrettern bestehen, wobei die Keilzinken mittels der erfindungsgemäßen Klebstoffzusammensetzung verbunden sind.

Ein weiterhin erfindungsgemäß bevorzugter Verbund sind Brettschichthölzer, die aus einer Vielzahl von flächig verleimten Einzelbrettern bestehen, wobei die Bretter untereinander zumindest teilweise, vorzugsweise ganz, mittels der erfindungsgemäßen Klebstoffzusammensetzung verbunden sind. Anstelle von Einzelbrettern können auch Endlosholzbretter verwendet werden.

Die erfindungsgemäße Klebstoffzusammensetzung eignet sich besonders für die Herstellung von Brettschichthölzern.

Die erfindungsgemäßen Verbunde eignen sich neben dem Einsatz als tragender Bestandteil von Dach-, Brücken- und Deckenkonstruktionen gleichfalls beim Herstellen von Betonschalungen, insbesondere als Betonschalungsträger sowie im Gerüstbau, insbesondere als Gerüstbeläge.

Weiterhin ist es bevorzugt, daß der erfindungsgemäße Verbund mindestens eine der folgenden Materialeigenschaften aufweisen:
(n) eine Delaminierungsbeständigkeit nach DIN EN 302 Teil 2 von maximal 5 % nach DIN EN 301, bevorzugt maximal 3 % und besonders bevorzugt maximal 1 %,
(o) eine Trockenscherfestigkeit im Bereich von mindestens 6 N/mm² bis maximal Substratbruch nach den Güterichtlinien der RAL-Gütegemeinschaft Holzleimbau.

Die Substratbruch- und Scherfestigkeitswerte für verschiedene Holzarten sind dem Holzlexikon DRW-Verlag, 3. Auflage 1988 zu entnehmen. Der Substratbruch der üblicherweise für Brettschichtholz verwendeten Holzart Fichte beträgt circa 7,5 N/mm².

Bei der Herstellung des Präpolymers der erfindungsgemäßen Klebstoffzusammensetzung werden die Komponenten A und B bevorzugt in einem derartigen Verhältnis eingesetzt, daß sich die vorbeschriebenen Eigenschaften des Präpolymers, insbesondere der NCO-Gehalt und die Viskosität, ergeben. Zusätzlich können zur Herstellung des Präpolymers Hilfs- und Zusatzstoffe oder Katalysatoren eingesetzt werden.

Die weiteren Ausgangsstoffe bzw. Komponenten für die Herstellung der Präpolymer- und Klebstoffzusammensetzung werden im folgenden beispielhaft beschrieben:

Als gegenüber Isocyanaten reaktive Verbindungen, nämlich Komponente A, können zweckmäßigerweise solche mit einer Funktionalität von 2 bis 8, vorzugsweise 2 bis 6, und einem Molekulargewicht von 60 bis 10.000 verwendet werden, die als gegenüber Isocyanaten reaktive Gruppen Hydroxyl-, Thiol- und/oder primäre und/oder sekundäre Aminogruppen aufweisen. Bewährt haben sich z. B. Polyole, ausgewählt aus der Gruppe der Polyetherole, beispielsweise Polytetrahydrofuran sowie Polyesterole, Polythioetherpolyole, hydroxylgruppenhaltige Polyacetale und hydroxylgruppenhaltige aliphatische Polycarbonate oder Mischungen aus mindestens zwei der genannten Polyole. Vorzugsweise Anwendung finden Polyesterole und/oder Polyetherole. Die Hydroxylzahl der Polyhydroxylverbindungen beträgt dabei in aller Regel 20 bis 850 mg KOH/g und vorzugsweise 25 bis 500 mg KOH/g.

Als gegenüber Isocyanaten reaktive Verbindungen können auch Diole und/oder Triole mit Molekulargewichten von 60 bis < 400 als Kettenverlängerungs- und/oder Vernetzungsmittel bei dem erfindungsgemäßen Verfahren eingesetzt werden. Zur Modifizierung der mechanischen Eigenschaften, z. B. der Härte, und zur Erhöhung der Stabilität des Präpolymers kann sich jedoch der Zusatz von Kettenverlängerungsmitteln, Vernetzungsmitteln oder gegebenenfalls auch Gemischen davon als vorteilhaft erweisen. Die Kettenverlängerungs- und/oder Vernetzungsmittel weisen vorzugsweise ein Molekulargewicht von 60 bis 300 g/mol auf. In Betracht kommen beispielsweise aliphatische, cycloaliphatische und/oder araliphatische Diole mit 2 bis 14, vorzugsweise 4 bis 10 Kohlenstoffatomen, z. B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Als Polyolkomponenten können allgemein auch hochfunktionelle Polyole, insbesondere Polyetherole auf Basis hochfunktioneller Alkohole, Zuckeralkohole und/oder Saccharide als Startermoleküle verwendet werden. Vorzugsweise werden jedoch 2- und/oder 3-funktionelle Polyether- bzw. Polyesterole auf Basis Glyzerin und/oder Trimethylolpropan und/oder Glykolen als Startermoleküle bzw. zu veresternde Alkohole eingesetzt. Die Herstellung der Polyetherole erfolgt dabei nach einer bekannten Technologie. Geeignete Alkylenoxide zur Herstellung der Polyole sind beispielsweise Tetrahydrofuran, Ethylenoxid, 1,3-Propylenoxid, 1,2- bzw. 2,3-Butylenoxid, Styroloxid, vorzugsweise Ethylenoxid und 1,2-Propylenoxid. Die Alkylenoxide können einzeln, alternierend nacheinander oder als Mischungen verwendet werden. Besonders bevorzugt werden in dem Präpolymer in der erfindungsgemäßen Klebstoffzusammensetzung als Polyetherole solche eingesetzt, die zum Abschluß der Alkoxylierung mit Ethylenoxid alkoxyliert wurden und damit primäre Hydroxylgruppen aufweisen.

Als Startermoleküle kommen beispielsweise in Betracht: Wasser, Glykole, wie Ethlyenglykol, Propylenglykol, 1,4-Butandiol und 1,6-Hexandiol, Amine, wie Ethylendiamin, Hexamethylendiamin, und 4,4'-Diaminodiphenylmethan und Aminoalkohole, wie Ethanolamin oder Triethanolamin.

Die Polyetherole besitzen eine Funktionalität von vorzugsweise 2 bis 6 und insbesondere 2 bis 3 und Molekulargewichte von 400 bis 10.000, vorzugsweise 1.000 bis 7.000. Die Polyetherole können allein oder in Mischungen verwendet werden.

Polycarbonatdiole sind ebenfalls geeignet. Als Polycarbonatdiole kommen solche mit aromatischen Dihydroxyverbindungen, z. B. auf Basis 4,4'-Dihydroxydiphenyl-2,2-propan oder solche auf Basis aliphatischer Dihydroxyverbindungen, z. B. 1,6-Hexandiol, in Frage. Die Molmassen erstrecken sich von 500 bis 4.000, vorzugsweise von 1.000 bis 2.000.

Geeignete Polyesterole als Polyolkomponente können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen durch Polymerisation von Lactonen mit 3 bis 20 Kohlenstoffatomen hergestellt werden. Als Dicarbonsäuren lassen sich beispielsweise Glutarsäure, Pimelinsäure, Korksäure, Sebacinsäure, Dodecansäure und vorzugsweise Adipinsäure, Bernsteinsäure und Phthalsäure einsetzen. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureanhydride oder Carbonsäurechloride zu verwenden. Geeignete aromatische Dicarbonsäuren sind Terephthalsäure, Isophthalsäure oder Mischungen aus diesen mit anderen Dicarbonsäuren, z.B. Diphensäure, Sebacinsäure, Bemsteinsäure und Adipinsäure. Beispiele für geeignete Glykole sind Diethylenglykol, 1,5-Pentandiol, 1,10-Decandiol und 2,2,4-Trimenthylpentandiol-1,5. Vorzugsweise verwendet werden 1,2-Ethandiol, 1,4-Butandiol, 1,6-Hexandiol und 2,2-Dimethylpropandiol-1,3; 1,4-Dimethylolcyclohexan; 1,4-Diethanolcyclohexan, ethoxylierte/propoxylierte Produkte des 2,2-Bis-(4-hydroxy-phenylen)-propan (Bisphenol A). Je nach den gewünschten Eigenschaften der Polyurethane können die Polyole alleine oder als Mischung in verschiedenen Mengenverhältnissen verwendet werden. Als Lactone für die Herstellung der Polyesterole eignen sich z. B. α,α-Dimethyl-β-propiolacton, γ-Butyrolacton und vorzugsweise ε-Caprolacton. Die Polyesterole besitzen vorzugsweise eine Funktionalität von 2 bis 4, insbesondere 2 bis 3, und ein Molekulargewicht von 1.200 bis 3.000, vorzugsweise 1.500 bis 3.000 und insbesondere 1.500 bis 2.500.

Erfindungsgemäß haben sich für das Präpolymer insbesondere Polyolgemische bewährt. Derartige Polyolgemische weisen vorzugsweise mindestens ein Diol, vorzugsweise Polypropylenglykol und mindestens ein Triol, vorzugsweise Polyethertriol auf. Besonders geeignete Diole weisen ein mittleres Molekulargewicht im Bereich von 500 bis 3.000, bevorzugt 700 bis 1.500 und besonders bevorzugt 800 bis 1.500 und besonders bevorzugt 800 bis 1.200 auf. Als Triol haben sich solche mit einem mittleren Molekulargewicht von 1.000 bis 8.000, bevorzugt 2.000 bis 6.000 und besonders bevorzugt 3.000 bis 5.000 bewährt. Besonders bevorzugt ist es, daß das Polyolgemisch eine OH-Zahl im Bereich von 30 bis 140, bevorzugt 50 bis 90 und besonders bevorzugt 60 bis 80 mg KOH/g aufweist. Die vorgenannten Diole und Triole können nicht nur als Polyolgemisch sondern auch jeweils für sich zur Herstellung des Präpolymers eingesetzt werden.

In einer anderen Ausführungsform des erfindungsgemäßen Präpolymers hat sich der Einsatz eines Polyetherpolyols, das vorzugsweise primäre Hydroxylgruppen aufweist, mit einer OH-Zahl im Bereich von 10 bis 60, bevorzugt 20 bis 40 und besonders bevorzugt 25 bis 35 mg KOH/g bewährt.

Sofern zur Herstellung der Präpolymere Kettenverlängerungsmittel, Vernetzungsmittel oder Mischungen davon Anwendung finden, kommen diese zweckmäßigerweise in einer Menge von 0 bis 20 Gew.-%, vorzugsweise von 0,5 bis 5 Gew.%, bezogen auf das Gewicht der insgesamt eingesetzten, gegenüber Isocyanaten reaktiven Verbindungen zum Einsatz.

Als Isocyanate bzw. Polyisocyanate der Komponente B kommen die an sich bekannten aliphatischen, cycloaliphatischen, araliphatischen und/oder aromatischen Isocyanate, bevorzugt Diisocyanate, in Frage, die gegebenenfalls nach allgemein bekannten Verfahren biuretisiert und/oder isocyanuratisiert worden sein können. Im einzelnen seien beispielhaft genannt: Alkylendiisocyanate mit 4 bis 12 Kohlenstoffatomen mit Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4, Lysinesterdiisocyanate (LDI), Hexamethylendiisocyanat-1,6 (HDI), Cyclohexan-1,3-und/oder -1,4-diisocyanat, 2,4- und 2,6-Hexahydro-toluylendiisocyanat sowie die entsprechenden Isomerengemische, 4,4'-, 2,2'- und 2,4'-Dieyclohexylmethandiisocyanat sowie die entsprechenden Isomerengemische, - 1-Isocyanato-3,3,5-trimethyl-5-isocyanotomethylcyclohexan (IPDI), 2,4- und/oder 2,6-Toluylendiisocyanat, 4,4'-, 2,4' und/oder 2,2'-Diphenylmethandiisocyanat (monomeres MDI), Polyphenylpolymethylenpolyisocyanate, (Polymer-MDI) und/oder Mischungen enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden.

Erfindungsgemäß besonders bevorzugt für die Herstellung des Präpolymers der erfindungsgemäßen Klebstoffzusammensetzung ist MDI, wie Polymer-MDI oder vorzugsweise Monomer-MDI, insbesondere 4,4'-MDI, oder Mischungen aus 2,4'-MDI und 4,4'-MDI.

In einer erfindungsgemäßen Ausführungsform hat sich für das Präpolymer als besonders geeignet erwiesen, ein Polymer-MDI mit einer mittleren Funktionalität im Bereich von 1 bis 5, bevorzugt 1,5 bis 4 und besonders bevorzugt 2 bis 3,5 und einer Viskosität im Bereich von 100 bis 400, bevorzugt 150 bis 300 und besonders bevorzugt 160 bis 260 mPas zu verwenden.

Als Katalysatoren können allgemein bekannte Verbindungen eingesetzt werden, welche die Reaktion von Isocyanaten mit den gegenüber Isocyanaten reaktiven Verbindungen stark beschleunigen, wobei vorzugsweise ein Gesamtkatalysatorgehalt von 0,01 bis 8 Gew.%, insbesondere 0,1 bis 5 Gew.-%, bezogen auf das Gewicht der insgesamt eingesetzten, gegenüber Isocyanaten reaktiven Verbindungen, verwendet wird. Beispielsweise können folgende Verbindungen verwendet werden: Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, N,N'-Dimorpholinodiethylether (DMDEE), N-Cyclohexylmorpholin, N,N,N',N'-Tetramethylethylendiamin, N,N,N',N'-Tetramethylbutandiamin, N,N,N',N'-Tetramethythexandiamin-1,6, Pentamethyldiethylentriamin, Dimethylpiperazin, N-Dimethylaminoethylpiperidin, 1,2-Dimethylimidazol, N-Hydroxypropylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethyl-aminoethanol, 2-(N,N-Dimethylaminoethoxy)ethanol, N,N',N-Tris-(dialkylaminoalkyl)hexahydrotriazine, z. B. N,N',N-Tris-(dimethylaminopropyl)-s-hexahydrotriazin, Eisen(II)-chlorid, Zinkchlorid, Bleioctoat und vorzugsweise Zinnsalze, wie Zinndioctoat, Zinndiethylhexoat, Dibutylzinhdilaurat und/oder Dibutyldilaurylzinnmercaptid, 2,3-Dimethyl-3,4,5,6-tetrahydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat und/oder Alkalisalze von langkettigen Fettsäuren mit 10 bis 20 Kohlenstoffatomen und gegebenenfalls seitenständigen OH-Gruppen. Weiterhin sind Trimerisierungskatalysatoren wie Alkali- oder Erdalkaliacetat, vorzugsweise Kaliumacetat, zu nennen. Die vorstehenden Katalysatoren können auch zusätzlich als Aktivator zu den als Aktivatoren eingesetzten Morpholinderivaten verwendet werden. Somit werden Katalysatoren in das Präpolymer als solches bei dessen Herstellung und Aktivatoren mit dem Präpolymer als zusätzlicher Bestandteil der erfindungsgemäßen Klebstoffzusammensetzung in diese eingearbeitet. Weiterhin haben sich als Katalysatoren bzw. Aktivatoren Ti-Verbindungen, insbesondere Ti(IV)-O-Alkylverbindungen, mit Alkylgruppen wie Methyl, Ethyl, n-Propyl, Isopropyl, n-Butyl, Isobutyl, tert.-Butyl, n-Pentyl, 2-Pentyl, 3-Pentyl, bevorzugt Ethyl, n-Propyl, Isopropyl, n-Butyl, Isobutyl, tert.-Butyl und besonders bevorzugt Ti(IV)butylat, bewährt.

Der Reaktionsmischung zur Herstellung der Präpolymere können gegebenenfalls noch weitere Hilfsmittel und/oder Zusatzstoffe zugesetzt werden. Genannt seien beispielsweise oberflächenaktive Substanzen, Stabilisatoren, Zellregler, Füllstoffe, Farbstoffe, Pigmente, Flammschutzmittel, Hydrolyseschutzmittel, fungistatische und bakteriostatisch wirkende Substanzen. Die oberflächenaktiven Substanzen und Stabilisatoren wirken einer "Hautbildung" der der Luft zugewandten Oberfläche der Klebstoffzusammensetzung entgegen. Weiterhin verbessern die oberflächenaktiven Substanzen sowie Stabilisatoren das Verlaufen der Klebstoffzusammensetzung sowie die Kriechfähigkeit der Klebstoffzusammensetzung und das Entgasen derselben. Als oberflächenaktive Substanzen kommen z. B. Verbindungen in Betracht, welche zur Unterstützung der Homogenisierung der Ausgangsstoffe dienen. Genannt seien beispielsweise Emulgatoren, wie die Natriumsalze von Ricinusölsulfaten oder von Fettsäuren sowie Salze von Fettsäuren mit Aminen, z. B. ölsaures Diethylamin, stearinsaures Diethanolamin, ricinolsaures Diethanolamin, Salze von Sulfonsäuren, z. B. Alkali- oder Ammoniumsalze von Dodecylbenzol- oder Dinaphthylmethandisulfonsäure und Ricinolsäure; Stabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkisch Rotöl und Erdnußöl, und Zellregler, wie Paraffine, Fettalkohole und Dimethylpolysiloxane. Zur Verbesserung der Emulgierwirkung, der Zellstruktur und/oder Stabilisierung des Präpolymeren eignen sich ferner die oben beschriebenen oligomeren Acrylate mit Polyoxyalkylen- und Fluoralkanresten als Seitengruppen. Wenn eine Schaumbildung verringert oder vermieden werden soll, sind als Entschäumer Trialkylphosphate bevorzugt. Diese besitzen vorzugsweise Alkylgruppen wie Methyl, Ethyl, n-Propyl, Isopropyl, n-Butyl, Isobutyl, tert.-Butyl, n-Pentyl, 2-Pentyl, 3-Pentyl, bevorzugt Ethyl, n-Propyl, Isopropyl, n-Butyl, Isobutyl, tert.-Butyl. Tributylphosphat, erhältlich unter dem Handelsnamen Entschäumer T der Bayer AG, ist für den vorgenannten Zweck besonders bevorzugt. Die oberflächenaktiven Substanzen werden üblicherweise in Mengen von 0,01 bis 5 Gew.-%, bezogen auf 100 Gew.% der insgesamt eingesetzten, gegenüber Isocyanaten reaktiven Verbindungen, angewandt.

Als Füllstoffe, insbesondere verstärkend wirkende Füllstoffe, die in dem Präpolymer unabhängig von denen in der eigentlichen Klebstoffzusammensetzung enthalten sein können, sind die an sich bekannten, üblichen organischen und anorganischen Füllstoffe, Verstärkungsmittel, Beschwerungsmittel, Mittel zur Verbesserung des Abriebverhaltens, Beschichtungsmittel usw. zu verstehen. Die nachfolgende beispielhafte Auflistung gilt für das Präpolymer als auch für die erfindungsgemäße Klebstoffzusammensetzung. Im einzelnen seien beispielhaft genannt: anorganische Füllstoffe bzw. Füllkörper, wie silikatische Mineralien, beispielsweise Schichtsilikate wie Antogorit, Serpentin, Homblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u. a.. Vorzugsweise verwendet werden Kaolin (China Clay), Aluminiumsilikat, Montmorillonit und Copräzipate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise Kohle, Melamin, Kollophonium, Cyclopentadienylharze und Pfropfpolymerisate in Betracht. Die anorganischen und organischen Füllstoffe könne einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Isocyanate und dem Gewicht der insgesamt eingesetzten gegenüber Isocyanaten reaktiven Verbindungen, einverleibt.

Die vorstehenden Füllstoffe können sowohl für sich mit dem Präpolymer oder bereits als Komponente des Präpolymers oder sowohl mit als auch als Komponente des Präpolymers in die erfindungsgemäße Klebstoffzusammensetzung eingearbeitet werden.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)-phos-phat, Tris-(2,3-dibrompropyl)phosphat, Tetrakis-(2-chlorethyl)ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z. B. Melamin, oder Mischungen aus mindestens zwei Flammschutzmitteln, wie z. B. Ammoniumpolyphosphaten und Melamin sowie gegebenenfalls Maisstärke oder Ammoniumpolyphosphat, Melamin und Blähgraphit und/oder gegebenenfalls aromatische Polyester zum Erhöhen der Flammfestigkeit der Präpolymer bzw. der Klebstoffzusammmensetzung verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf das Gewicht der insgesamt eingesetzten, gegenüber Isocyanaten reaktiven Verbindungen, zu verwenden.

Eine erfindungsgemäße Klebstoffzusammensetzung oder ein erfindungsgemäßer Verbund läßt sich im Hoch-, Tief-, Schiffs-, Fahrzeug- oder Flugzeugbau, vorzugsweise im Hoch- oder Tiefbau verwenden.

Weiterhin betrifft die Erfindung Hoch-, Tief-, Schiffs-, Fahrzeug- oder Flugzeugbauten, die eine Klebstoffzusammensetzung oder einen Verbund oder beides aufweisen.

Die Erfindung wird nun anhand von Beispielen erläutert:

### Beispiele

Die Klebstoffzusammensetzungen gemäß der nachfolgenden Tabellen wurden mit den in den nachfolgend beschriebenen Herstellungsverfahren synthetisierten Präpolymeren erhalten.

### Präpolymer A

59,4 Teile Monomer-MDI, ein Gemisch aus 50 - 54 Teilen 2,4'- und 46 - 50 Teilen 4,4'-Diphenylmethandiisocyanat (MDI), wurden unter trockener Atmosphäre in einem heiz/kühlbaren und mit Rührer ausgestatteten Behälter vorgelegt. Bei einer Produkttemperatur von 80 °C wurden langsam unter Rühren 40,6 Teile eines Polyolgemisches aus einem Polypropylenglykol mit einem mittleren Molekulargewicht von 1.000 und einem Polyethertriol mit einem mittleren Molekulargewicht von 4.000 zugegeben. Das Polyolgemisch hat eine OH-Zahl von 73 mg KOH/g. Nach Beendigung der Zugabe und einer Nachrührphase von 1 h wurde das Präpolymer auf Raumtemperatur abgekühlt und abgefüllt.

Das Präpolymer hat einen NCO-Gehalt von 17,5 % und eine Viskosität von 750 mPas.

### Präpolymer B

53,0 Teile Monomer-MDI, ein Gemisch aus 50 - 54 Teilen 2,4'- und 46 - 50 Teilen 4,4'-Diphenylmethandiisocyanat (MDI), wurden unter trockener Atmosphäre in einem heiz/kühlbaren und mit Rührer ausgestatteten Behälter vorgelegt. Bei einer Produkttemperatur von 80 °C wurden langsam unter Rühren 47,0 Teile eines Polyolgemisches aus einem Polypropylenglykol mit einem mittleren Molekulargewicht von 1.000 und einem Polyethertriol auf Aminbasis mit einem mittleren Molekulargewicht von 4.000 zugegeben. Das Polyolgemisch hat eine OH-Zahl von 73 mg KOH/g. Nach Beendigung der Zugabe und einer Nachrührphase von 1 h wurde das Präpolymer auf Raumtemperatur abgekühlt und abgefüllt.

Das Präpolymer hat einen NCO-Gehalt von 14,9 % und eine Viskosität von 1.200 mPas.

**Tabelle 1**

| **Klebstoff** | **Beispiel 1** | **Beispiel 2** |
|---|---|---|
| **Präpolymer** | A | B |
| **[Teile]** | 87,46 | 89,96 |
| **Faserfüllstoff** | Polyamid | Polyamid |
| **[Teile]** | 5 | 5 |
| **Füllstoff** | China Clay | China Clay |
| **[Teile]** | 5 | 5 |
| **Thixotropiermittel** | Kieselsäure | -- |
| [**Teile]** | 2,5 | 0 |
| **Aktivator** | DMDEE | -- |
| **[Teile]** | 0,05 | 0 |
| **Viskosität (25**°**C) [mPas] DIN 53018** | 3990 | 4400 |
| **Verarbeitbarkeit entsprechend dem Stand der Technik** | Ja | Ja |
| **Lösungsmittelgehalt** | kein | kein |
| **Lagerstabilität (Sedimentation nach 6 Monaten)** | Ja | Ja |
| **NCO-Gehalt [%]** | 14,7 | 13,4 |

| | | |
|---|---|---|
| DMDEE 2,2'-Dimorpholinodiethylether | | |

**Tabelle 2**

| **Zugscherprüfung nach DIN EN 302 Teil 1** | | | |
|---|---|---|---|
| **Behandlung** | **Mindestanforderung DIN EN 301** | **Beispiel 1** | **Beispiel 2** |
| A1 | | | |
| 0,1 mm | 10 | 15,5 | 13,2 |
| 1,0 mm | 8 | 10 | 9,8 |
| A2 | | | |
| 0,1 mm | 6 | 7 | |
| 1,0 mm | 4 | 5 | |
| A3 | | | |
| 0,1 mm | 8 | 15 | |
| 1,0 mm | 6,4 | 9,5 | |
| A4 | | | |
| 0,1 mm | 6 | 7 | 6,1 |
| 1,0 mm | 4 | 5,5 | 4,3 |
| A5 | | | |
| 0,1 mm | 8 | 13,5 | 12,5 |
| 1,0 mm | 6,4 | 10 | 11,6 |

**Tabelle 3**

| **Delaminierungsprüfung nach DIN EN 302 Teil 2** | | |
|---|---|---|
| **Behandlung** | **Mindestanforderung DIN EN 301** | **Bespiel 1** |
| B2 | max. 5 % | 1,80 % |

**Tabelle 4**

| **Säureschädigung nach DIN EN 302 Teil 3** | | |
|---|---|---|
| | **Mindestanforderung DIN EN 301** | **Beispiel 1** |
| **Unbehandelt** | 2 | 2,5 |
| **Nach Behandlung** | 1,6 | 2,7 |

**Tabelle 5**

| **Kreuzscherfestigkeit nach DIN EN 302 Teil 4** | | |
|---|---|---|
| **Behandlung** | **Mindestanforderung DIN EN 301** | **Beispiel 1** |
| **Klimazyklus** | 1,5 | 3 |

## Patentansprüche

1. Klebstoffzusammensetzung, als Bestandteile mindestens enthaltend:
- bis zu 99,9 Gew.% der Klebstoffzusammensetzung eines Präpolymers, erhältlich aus mindestens einer eine gegenüber Isocyanaten reaktive Verbindung aufweisenden Komponente A und mindestens einer ein Isocyanat aufweisenden Komponente B,
- 0,1 bis 20 Gew.% eines mindestens eine Faser enthaltenden Füllstoffs, der zusätzlich zu der Faser aus mindestens einem nicht-faserförmigen Füllkörper besteht,
- 0 bis 20 Gew.% übliche Zusatz- und Hilfsstoffe,
- 0 bis 10 Gew.-% eines Aktivators,
wobei die mindestens eine Faser einen Durchmesser im Bereich von 5 bis 100 µm und eine Länge im Bereich von 0,02 bis 6 mm besitzt.

2. Klebstoffzusammensetzung nach Anspruch 1, mit mindestens einem der folgenden Merkmale (i) bis (iii):
(i) das Präpolymer weist mindestens eines der folgenden Untermerkmale (a) und (b) auf:
(a) einen NCO-Gehalt von 5 bis 30 Gew.%, bezogen auf das Präpolymer,
(b) eine Viskosität bei 25 °C im Bereich von 300 bis 150.000 mPas,
(ii) die Komponente A weist mindestens eines der folgenden Untermerkmale (c) und (d) auf:
(c) die Komponente A enthält mindestens ein Diol oder Polyol,
(d) die OH-Zahl der Komponente A liegt im Bereich von 10 bis 500 mg KOH/g,
(iii) der Füllstoff weist das folgende Untermerkmal (e) auf:
(e) die Faser besteht mindestens aus Faserpolymer.

3. Klebstoffzusammensetzung nach Anspruch 2, mit mindestens einem der folgenden Merkmale (iv) und (v)
(iv) das Faserpolymer ist mindestens ein Polyamid,
(v) der Füllkörper besteht aus mindestens einem anorganischen Material.

4. Klebstoffzusammensetzung nach Anspruch 3, wobei das anorganische Material eine Sauerstoffverbindung des Siliciums, Aluminiums oder Magnesiums oder mindestens zwei davon ist.

5. Klebstoffzusammensetzung nach einem der Ansprüche 1 bis 4, wobei der Aktivator aus mindestens einem Morpholinderivat besteht.

6. Klebstoffzusammensetzung nach einem der Ansprüche 1 bis 5, wobei die Klebstoffzusammensetzung lösungsmittelarm ist.

7. Verfahren zur Herstellung einer Klebstoffzusammensetzung nach einem der Ansprüche 1 bis 6, wobei die in Anspruch 1 definierten Bestandteile miteinander in Kontakt gebracht werden.

8. Klebstoffzusammensetzung, erhältlich durch Inkontaktbringen der in Anspruch 1 definierten Bestandteile.

9. Klebstoffzusammensetzung nach einem der Ansprüche 1 bis 6 oder 8 mit mindestens einer der folgenden Materialeigenschaften (g) bis (m):
(g) Antrockenzeit bei Normalklima 20/65-1 gemäß DIN 50014 bei einer Auftragsmenge von 250 g/m² im Bereich von 20 bis 40 Minuten,
(h) Antrockenzeit bei Normalklima 20/65-1 gemäß DIN 50014 bei einer Auftragsmenge von 400 g/m² im Bereich von 20 bis 40 Minuten,
(i) Viskosität bei 25 °C im Bereich von 300 bis 150.000 mPas,
(k) Lagerstabilität von 1 bis 4 Monaten,
(l) NCO-Gehalt im Bereich von 3 bis 20 Gew.%, bezogen auf die Klebstoffzusammensetzung,
(m) Mindestpreßzeit gemäß DIN 68141 im Bereich von 5 bis 8 Stunden.

10. Verbund, mindestens enthaltend ein Substrat und eine Klebstoffzusammensetzung nach einem der Ansprüche 1 bis 6, 8 oder 9.

11. Verbund nach Anspruch 10, mit mindestens einer der folgenden Materialeigenschaften:
(n) eine Delaminierungsbeständigkeit gemäß DIN EN 302 Teil 2 von maximal 5 % nach DIN EN 301,
(o) eine Trockenscherfestigkeit im Bereich von mindestens 6 N/mm² bis maximal Substratbruch nach den Güterichtlinien der RAL-Gütegemeinschaft Holzleimbau.

12. Verbund nach Anspruch 10 oder 11, wobei das Substrat Holz enthält und schicht- oder keilzinkverleimt, oder beides, wird.

13. Verwendung einer Klebstoffzusammensetzung nach einem der Ansprüche 1 bis 6, 8 oder 9 oder eines Verbundes nach einem der Ansprüche 10 bis 12 im Hoch-, Tief-, Schiffs-, Fahrzeug- oder Flugzeugbau, vorzugsweise in Brettschichtholz.

14. Hoch-, Tief-, Schiffs-, Fahrzeug- oder Flugzeugbauten, vorzugsweise in Brettschichtholz, aufweisend eine Klebstoffzusammensetzung nach einem der Ansprüche 1 bis 6, 8 oder 9 oder einen Verbund nach einem der Ansprüche 10 bis 12.

## Claims

1. An adhesive composition comprising as constituents at least:
- up to 99.9% by weight of the adhesive composition of a prepolymer obtainable from at least one component A, containing an isocyanate-reactive compound, and at least one component B, containing an isocyanate,
- from 0.1 to 20% by weight of a filler comprising at least one fiber and composed, in addition to the fiber, of at least one nonfibrous filling element,
- from 0 to 20% by weight of customary additives and auxiliaries, and
- from 0 to 10% by weight of an activator, the at least one fiber having a diameter in the range from 5 to 100 µm and a length in the range from 0.02 to 6 mm.

2. The adhesive composition according to claim 1, comprising at least one of the following features (i) to (iii):
(i) the prepolymer has at least one of the following subsidiary features (a) and (b):
(a)an NCO content of from 5 to 30% by weight, based on the prepolymer,
(b) a viscosity at 25°C in the range from 300 to 150,000 mPas;
(ii) the component A has at least one of the following subsidiary features (c) and (d):
(c) the component A comprises at least one diol or polyol,
(d) the OH number of the component A is in the range from 10 to 500 mg KOH/g;
(iii) the filler has the following subsidiary feature (e):
(e) the fiber comprises at least fiber polymer,

3. The adhesive component according to claim 2, comprising at least one of the following features (iv) and (v)
(iv) the fiber polymer is at least one polyamide,
(v) the filling element comprises at least one inorganic material.

4. The adhesive composition according to claim 3, wherein said inorganic material is an oxygen compound of silicon, aluminum or magnesium or at least two of the above.

5. The adhesive composition according to any of claims 1 to 4, wherein said activator comprises at least one morpholine derivative.

6. The adhesive composition according to any of claims 1 to 5, with a low solvent content.

7. A process for preparing an adhesive composition according to any of claims 1 to 6, wherein the constituents defined in claim 1 are brought into contact with one another.

8. An adhesive composition obtainable by bringing into contact the constituents defined in claim 1.

9. The adhesive composition according to any of claims 1 to 6 or 8, comprising at least one of the following material properties (g) to (m):
(g)initial drying time under standard conditions 20/65-1 in accordance with DIN 50014 at an application rate of 250 g/m² in the range from 20 to 40 minutes,
(h) initial drying time under standard conditions 20/65-1 in accordance with DIN 50014 at an application rate of 400 g/m² in the range from 20 to 40 minutes,
(i)viscosity at 25°C in the range from 300 to 150,000 mPas,
(k) storage stability of from 1 to 4 months,
(l)NCO content in the range from 3 to 20% by weight, based on the adhesive composition,
(m)minimum pressing time in accordance with DIN 68141 in the range from 5 to 8 hours.

10. A composite at least comprising a substrate and an adhesive composition according to any of claims 1 to 6, 8 and 9.

11. The composite according to claim 10, comprising at least one of the following material properties:
(n)a delamination resistance in accordance with DIN EN 302 Part 2 of not more than 5% in accordance with DIN EN 301,
(o) a dry shear strength in the range from at least 6 N/mm² up to a maximum of substrate fracture in accordance with the quality guidelines of the RAL-Gütegemeinschaft Holzleimbau.

12. The composite according to claim 10 or 11, wherein the substrate comprises wood and glued layer(s) and/or glued finger joint(s).

13. The use of an adhesive composition according to any of claims 1 to 6, 8 and 9 or of a composite according to any of claims 10 to 12 in building construction, civil engineering, marine, automotive or aircraft construction, preferably in glued laminated wood.

14. A building construction, civil engineering, marine, automotive or aircraft structure, preferably in glued laminated wood, comprising an adhesive composition according to any of claims 1 to 6, 8 and 9 or a composite according to any of claims 10 to 12.

## Revendications

1. Composition adhésive contenant, comme constituants, au moins :
- jusqu'à 99,9 % en poids, par rapport à la composition adhésive, d'un prépolymère que l'on peut obtenir à partir d'au moins un composant A présentant un composé réactif vis-à-vis des isocyanates et d'au moins un composant B présentant un isocyanate,
- 0,1 à 20 % en poids d'une matière de remplissage contenant au moins une fibre et constituée, en supplément de la fibre, d'au moins un corps de remplissage non fibreux,
- 0 à 20 % en poids d'additifs et d'adjuvants courants,
- 0 à 10 % en poids d'un activateur,
l'au moins une fibre présentant un diamètre de l'ordre de 5 à 100 µm et une longueur de l'ordre de 0,02 à 6 mm.

2. Composition adhésive suivant la revendication 1, présentant au moins une des particularités (i) à (iii) suivantes :
(i) le prépolymère présente au moins une des sous-particularités (a) et (b) suivantes :
(a) une teneur en NCO de 5 à 30 % en poids, par rapport au prépolymère,
(b) une viscosité à 25°C de l'ordre de 300 à 150.000 mPas,
(ii) le composant A présente au moins une des sous-particularités (c) et (d) suivantes :
(c) le composant A contient au moins un diol ou polyol,
(d) l'indice de OH du composant A est situé dans la gamme de 10 à 500 mg de KOH/g,
(iii) la matière de remplissage présente la sous-particularité (e) suivante :
(e) la fibre est au moins constituée de polymère fibreux.

3. Composition adhésive suivant la revendication 2, comprenant au moins une des particularités (iv) et (v) suivantes :
(iv) le polymère fibreux est au moins un polyamide,
(v) le corps de remplissage est constitué d'au moins une matière inorganique.

4. Composition adhésive suivant la revendication 3, dans laquelle la matière inorganique est un composé oxygéné du silicium, de l'aluminium ou du magnésium ou d'au moins deux d'entre eux.

5. Composition adhésive suivant l'une des revendications 1 à 4, dans laquelle l'activateur est constitué d'au moins un dérivé de morpholine.

6. Composition adhésive suivant l'une des revendications 1 à 5, dans laquelle la composition adhésive est pauvre en solvant.

7. Procédé de préparation d'une composition adhésive suivant l'une des revendications 1 à 6, dans lequel les constituants définis dans la revendication 1 sont amenés en contact mutuel.

8. Composition adhésive que l'on peut obtenir par mise en contact des constituants définis dans la revendication 1.

9. Composition adhésive suivant l'une des revendications 1 à 6 ou 8, présentant au moins une des propriétés de matière (g) à (m) suivantes :
(g) un temps de séchage sous climat normal 20/65-1 selon la norme DIN 50014, pour une quantité d'application de 250 g/m² dans l'intervalle de 20 à 40 minutes,
(h) un temps de séchage sous climat normal 20/65-1 selon la norme DIN 50014, pour une quantité d'application de 400 g/m² dans l'intervalle de 20 à 40 minutes,
(i) une viscosité à 25°C de l'ordre de 300 à 150.000 mPas,
(k) une stabilité à l'entreposage de 1 à 4 mois,
(l) une teneur en NCO de l'ordre de 3 à 20% en poids, par rapport à la composition adhésive,
(m) un temps de pressage minimal selon la norme DIN 68141 de l'ordre de 5 à 8 heures.

10. Composite contenant au moins un substrat et une composition adhésive suivant l'une des revendications 1 à 6, 8 ou 9.

11. Composite suivant la revendication 10, présentant au moins une des propriétés de matière suivantes :
(n) une résistance au délaminage selon la norme DIN EN 302 partie 2 de 5 % au maximum selon la norme DIN EN 301,
(o) une résistance au cisaillement à sec de l'ordre d'au moins 6 N/mm² jusqu'au maximum d'une rupture du substrat selon les directives en matière de marchandises de la RAL-Gütegemeinschaft Holzleimbau.

12. Composite suivant la revendication 10 ou 11, dans lequel le substrat contient du bois et est collé en couche ou par dents ou les deux.

13. Utilisation d'une composition adhésive suivant l'une des revendications 1 à 6, 8 ou 9, ou d'un composite suivant l'une des revendications 10 à 12, dans le bâtiment, le génie civil, la construction navale, automobile ou aéronautique, de préférence en bois laminé collé.

14. Constructions du bâtiment, du génie civil, navales, automobiles ou aéronautiques, de préférence en bois laminé collé, présentant une composition adhésive suivant l'une des revendications 1 à 6, 8 ou 9 ou un composite suivant l'une des revendications 10 à 12.
